(19) Europäisches Patentamt
European Patent Office
Office européen des brevets

(11) EP 0 664 231 B1

(12) **FASCICULE DE BREVET EUROPEEN**

(45) Date de publication et mention
de la délivrance du brevet:
**25.08.1999 Bulletin 1999/34**

(51) Int. Cl.$^6$: **B60C 15/00**, B60C 9/02

(21) Numéro de dépôt: **95100187.4**

(22) Date de dépôt: **09.01.1995**

(54) **Ancrage de la carcasse d'un pneumatique**

Verankerung der Karkasse eines Reifens

Anchoring of a tyre carcass

(84) Etats contractants désignés:
**DE ES FR GB IT LU**

(30) Priorité: **21.01.1994 FR 9400794**

(43) Date de publication de la demande:
**26.07.1995 Bulletin 1995/30**

(73) Titulaire: **SEDEPRO**
**F-75015 Paris (FR)**

(72) Inventeurs:
• **Herbelleau, Yves**
**F-63200 Riom (FR)**

• **Pradelle, Jean-Jacques**
**F-63000 Clermont-Ferrand (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:
EP-A- 0 582 196       DE-A- 2 424 993
DE-A- 2 513 782       FR-A- 408 540
FR-A- 1 169 474       FR-A- 1 256 432
FR-A- 2 132 509       US-A- 4 510 291

## Description

La présente invention concerne les pneumatiques. Plus particulièrement, elle concerne la disposition des fils de renforcement dans les flancs et dans les bourrelets ; elle concerne également l'ancrage des fils de carcasse dans le bourrelet.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Il est souhaitable d'assurer une évolution progressive de la rigidité du bourrelet lorsque l'on se déplace radialement vers le haut en direction du flanc. Dans la technique actuelle, il est assez difficile d'assurer une telle évolution progressive de rigidité entre le flanc et le bourrelet. Le flanc doit présenter une souplesse importante, et le bourrelet doit au contraire présenter une importante rigidité. En effet, les renforts que l'on dispose dans cette partie du pneumatique présentent toujours inévitablement une discontinuité : à l'extrémité radialement supérieure du retournement de carcasse, on passe sans transition dans une zone dépourvue de ce retournement de carcasse, zone qui est donc inévitablement moins rigide. Pour rappel, "radialement vers le haut", ou "radialement supérieur" signifie vers les plus grands rayons.

Dans le cas des carcasses radiales, l'état de la technique connaît déjà d'autres principes de conception qui permettent d'éviter les retournements autour d'une tringle. A titre d'exemple, on peut citer le brevet US 3 072 171, correspondant au préambule de la revendication 1, dans lequel on proposait de supprimer le retournement des nappes de carcasse, et de disposer des fils orientés circonférentiellement à côté des fils de carcasse orientés radialement. Dans la structure connue, il est cependant difficile d'assurer un ancrage suffisamment résistant des fils de carcasse aux fils orientés circonférentiellement, ce qui fait que cette proposition n'a jamais connu d'application réelle.

Le but de l'invention est de proposer une nouvelle façon de disposer le fil de renforcement de carcasse afin de pouvoir assurer une évolution aussi progressive que possible de la rigidité de flexion du flanc du pneumatique lorque l'on se rapproche du bourrelet, tout en permettant l'ancrage d'un très grand nombre de fils de carcasse.

Un autre but poursuivi par l'invention est de proposer une structure de renforcement pour pneumatique qui se prête aisément à une fabrication mécanisée.

Le but de l'invention est atteint par moyen de la combinaison des caractéristiques de la revendication indépendante 1.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhésion sur le caoutchouc. Le terme "tronçon" signifie qu'il ne s'agit pas d'une carcasse mono-fil, fabriquée à partir d'un seul fil continu disposé selon une trajectoire adéquate. Un tronçon est un morceau de fil individualisé par une coupe. Un tronçon comporte deux bords coupés, dont un au moins est dans la présente invention disposé dans un bourrelet, à un endroit proche de sa base. Une carcasse sera dite radiale lorsque ses fils sont disposés à 90°, mais aussi, selon la terminologie en usage, à un angle proche de 90°.

Dans le bourrelet réalisé conformément à la présente invention, en passant du flanc au bourrelet, les fils de carcasse se répartissent de part et d'autre d'un élément de remplissage, qui peut comporter des fils orientés circonférentiellement. De préférence, afin que chacun des tronçons de fil de carcasse contribue de manière sensiblement identique à la reprise des efforts dus au gonflage, chacun desdits alignements du bourrelet est bordé latéralement par au moins une pile de fils orientés circonférentiellement.

Pour les pneumatiques subissant des sollicitations importantes, afin d'assurer une bonne transmission des efforts entre les tronçons de fil de carcasse et les fils orientés circonférentiellement, on interpose un caoutchouc à haut module d'élasticité, c'est à dire un mélange de caoutchouc ayant une dureté Shore A supérieure à 70, entre les fils orientés circonférentiellement et chaque alignement de fils de carcasse. Ainsi, les fils orientés circonférentiellement ne sont pas au contact direct des fils orientés radialement.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. L'agencement revendiqué ici assure la fonction d'ancrage de la carcasse.

On sait aussi que, toujours dans l'état de la technique, la même tringle assure en outre une fonction de serrage du bourrelet sur sa jante. L'agencement revendiqué ici est également capable d'assurer un serrage suffisant.

Il va sans dire que l'invention peut être utilisée en adjoignant d'un côté et/ou de l'autre de la structure revendiquée d'autres éléments faisant aussi partie de la carcasse ou de son ancrage, comme certaines variantes vont l'illustrer. De même, l'invention peut être utilisée en multipliant les carcasses de même nature, ou encore en adjoignant un autre type de carcasse à une carcasse conforme à l'invention. Tous les détails de réalisation sont donnés dans la description qui suit, à consulter avec les figures suivantes :

La figure 1 est une coupe radiale montrant essentiellement un flanc et un bourrelet d'un pneumatique selon l'invention ;

La figure 2 est une vue en perspective, montrant schématiquement la disposition des fils de renforcement ;

La figure 3 est une coupe radiale montrant une deuxième variante d'exécution de l'invention ;

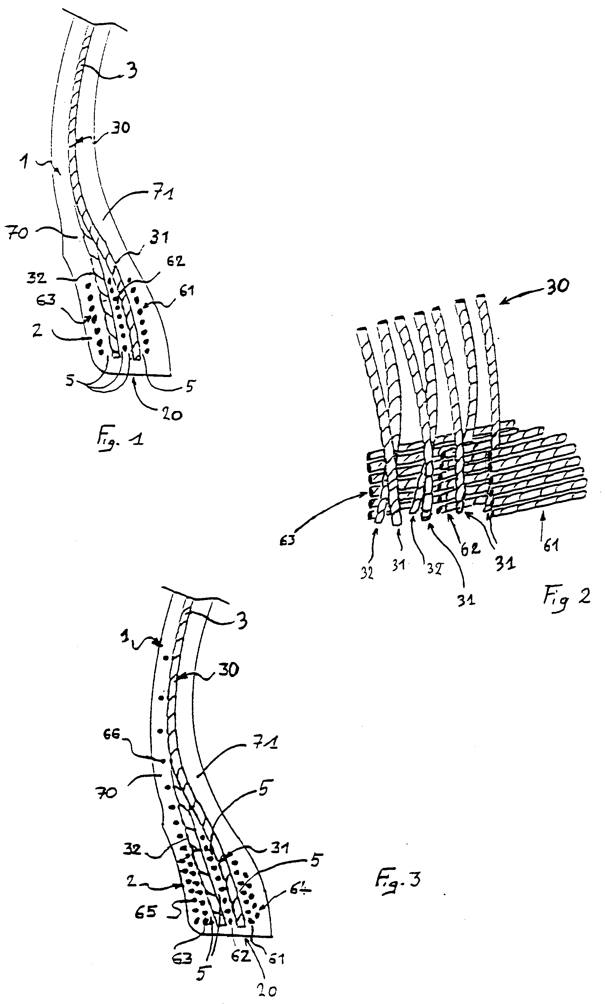

Les figures 1 et 2 illustrent une première variante de réalisation. On y voit les différentes parties bien connues d'un pneumatique, plus spécialement concernées par la présente invention, à savoir le flanc 1 et le bourrelet 2. Le renforcement de carcasse est constitué par des tronçons de fil 3, ici orientées radialement dans les flancs 1.

Aux figures 1 à 3, on voit que, dans chaque flanc 1, le fil 3 de carcasse forme un seul alignement 30 circonférentiel de tronçons de fil, et que, en partant d'un flanc pour rejoindre la base d'un bourrelet 2, la carcasse se divise en deux alignements circonférentiels de fils 31, 32 s'écartant axialement progressivement l'un de l'autre.

De préférence, les tronçons de fil sont disposés de façon à ce que, dans les flancs, deux tronçons de fil de carcasse adjacents soient issus d'alignements différents du bourrelet 2. Autrement dit, dans le flanc, il y a alternance des fils issus de chacun des alignements 31 et 32 du bourrelet 2.

Cela aboutit à une disposition en quinconce qui apparaît très bien à la perspective de la figure 2. Les deux alignements 31 et 32 sont séparés par un élément de remplissage, qui permet d'élever très progressivement la rigidité de flexion. En outre, on divise par deux le nombre de fils dans un alignement à l'intérieur du bourrelet, par rapport au nombre de fils présents dans l'alignement du flanc. Cette disposition est très intéressante car le rayon étant plus petit à hauteur du bourrelet, il y a moins de place pour loger les fils alignés que dans le flanc. L'invention permet d'utiliser une plus grande densité de fils. Autrement dit, grâce à l'invention, on augmente le nombre de fils de carcasse à partir duquel il faudra recourir à une carcasse supplémentaire distincte, faute de place dans le bourrelet pour loger l'ensemble des fils.

L'invention permet également de bien imprégner les fils par du caoutchouc et d'assurer la parfaite cohésion du bourrelet, parce que cette répartition des fils favorise la parfaite mise en place de tous les tronçons de fil de carcasse.

Il pourrait bien entendu y avoir, dans le bourrelet, plus de deux alignements circonférentiels de fils s'écartant axialement progressivement les uns des autres, tous issus d'un alignement du flanc. Dans ce cas, on divise par plus de deux le nombre de fils de chaque alignement du bourrelet par rapport au nombre de fil de l'alignement du flanc dont ils sont issus.

Cette variante, tout comme celle illustrée par la figure 3, est tout particulièrement intéressante parce que, au niveau du flanc 1 du pneumatique, il y a un seul alignement circonférentiel de tronçons de fils (c'est à dire une seule couche de fils). Ceci est de nature à autoriser une très grande souplesse des flancs : la rigidité de flexion du flanc à l'écrasement d'un pneumatique pourvu d'une telle structure de renforcement reste faible, bien plus faible que lorsqu'il y a deux nappes de carcasse comme dans des architectures couramment employées lorsque l'on multiplie le nombre de fils de carcasse, pour les pneumatiques fortement sollicités, ou lorsque l'on utilise des fils moins résistants.

Afin d'assurer un parfait ancrage d'une carcasse, on réalise un bourrelet composite stratifié. A l'intérieur du bourrelet 2, axialement de part et d'autre de chaque alignement 31, 32 du bourrelet, est disposée au moins une pile de fils orientés circonférentiellement 61, 62 et 62, 63, avec interposition d'une couche 5 de mélange de caoutchouc ayant une dureté Shore A supérieure à 70.

Les couches 5 peuvent être obtenue, dans le pneumatique vulcanisé parce que, au moment de l'assemblage du pneumatique, l'on a déposé du caoutchouc à la seule fin de réaliser lesdites couches, ou bien parce qu'on a utilisé, pour obtenir les enroulements 61, 62, 63, et/ou éventuellement pour former la carcasse, du fil suffisamment enrobé de caoutchouc pour que, après moulage il apparaisse les couches 5 que l'on vient de décrire.

Le fil employé pour les piles de fil orienté circonférentiellement est de préférence du fil métallique laitonné. Dans chaque pile 61, 62, 63, les fils sont sensiblement concentriques et superposés. Quant à la manière d'obtenir lesdites piles de fil, on peut superposer des anneaux de diamètre progressivement croissant, ou bien on peut par exemple bobiner plusieurs tours de fil.

Les expérimentations ont révélé des résultats très intéressants en endurance en utilisant, pour les couches de caoutchouc 5, un mélange contenant un élastomère synthétique SBR utilisé seul, ou en coupage avec du polybutadiène, ledit SBR ayant une température de transition vitreuse (Tg) comprise entre -70°C et -30°C et ledit polybutadiène ayant une Tg comprise entre -40°C et -10°C, le ou lesdits élastomères synthétiques étant utilisés en proportion totalisée d'au moins 40 % du poids total d'élastomère, le solde étant constitué par du caoutchouc naturel. Les Tg considérées sont mesurées par analyse thermique différentielle.

De préférence, on utilise un SBR solution. Par exemple, on utilise un mélange contenant 50 % de SBR solution ayant une Tg valant -48°C, contenant 50 % de NR, avec addition de charges renforçantes et de résine pour obtenir la dureté Shore A souhaitée.

Pour obtenir un bon collage d'une couche 5 de caoutchouc à la fois sur les fils métalliques laitonnés des piles 61, 62 et sur les fils textiles 3 de la carcasse, et pour garantir une bonne endurance de ce collage à haute température, ladite couche 5 de caoutchouc comporte un taux de soufre important et on emploie des additifs promoteurs d'adhésion (par exemple des sels métalliques de cobalt ou de nickel) en proportions bien ajustées. On utilise par exemple un taux de soufre compris entre 5 et 8 % du poids total d'élastomère et du cobalt en quantité de 0.2 % du poids total d'élastomère.

Il n'est pas nécessaire d'ajouter un mélange de caoutchouc formulé spécifiquement et uniquement pour assurer l'imprégnation du fil de carcasse 3, ou des enroulements de fil formant les piles 61 ou 62. Le même type de mélange que celui formulé pour les couches 5 assure les fonctions de calandrage et de liaison entre les tronçons de fil d'une même pile, et entre les différentes piles de fil, par imprégnation lors du moulage.

Afin d'assurer une excellente reprise de la tension apparaissant dans les fils de carcasse sous l'effet de la pression de gonflage, il est souhaitable que l'extrémité radialement la plus basse des fils de carcasse soit disposée radialement à un niveau inférieur à la partie la plus basse de la ou des piles de fils circonférentiels adjacentes.

De préférence, le fil 3 de carcasse est continu d'un bourrelet à l'autre et passe sous la bande de roulement. Les différents moyens de renforcement de la structure du pneumatique sous la bande de roulement ne font pas partie de la présente invention. Il suffit de signaler qu'ils peuvent être constitués par toutes les méthodes de renforcement adéquates, comme par exemple des fils disposés de façon à assurer une ceinture triangulée. En outre, dans le bourrelet, on peut bien sûr disposer un mélange de caoutchouc très raide, du genre utilisé pour les bourrages sur tringle dans les pneumatiques classiques. Ce caoutchouc de bourrage est diposé d'un côté et/ou de l'autre du renforcement de carcasse, et/ou il est utilisé comme élément de remplissage.

A la figure 3, on voit une autre variante de réalisation de l'invention. A l'intérieur du bourrelet 2, on a ajouté les enroulements circonférentiels de fil 63 et 64. Il ne subsiste entre les fils que des couches minces de caoutchouc, c'est-à-dire des couches pas plus épaisses que le diamètre des fils des enroulement ou des alignements. Ces couches minces peuvent être obtenues après moulage parce que lors de l'assemblage du pneumatique on a enroulé du fil enrobé de caoutchouc pour obtenir les piles 64 et 65 et aussi le cas échéant les piles 61, 62 et 63.

Au besoin, on multiplie les piles d'enroulements de fils circonférentiels adjacentes pour renforcer le bourrelets. Le groupement de plusieurs piles adjacentes comme 61, 64 ou 63, 65, plus d'autres piles éventuelles crée une sorte de paquets de fils. Il est bien évident qu'une autre solution pourrait consister à disposer l'ensemble de ces fils d'une autre manière que en piles orientées sensiblement radialement, dès lors que l'ensemble des fils occupe une section radiale approximativement équivalente.

A la même figure, on voit qu'il existe des enroulements de fil 66 orientées circonférentiellement remontant radialement vers le haut dans la partie du flanc 1 située sous l'équateur. Cela permet de donner des allures différentes des formes d'équilibre naturel d'une carcasse radiale gonflée. On peut ainsi maîtriser parfaitement la forme et les rigidités du pneumatique lorsqu'il est gonflé sur la roue. On peut bien entendu utiliser des fils de nature différente dans les flancs et dans le bourrelet, ou à l'intérieur de ceux-ci. Bien entendu, cette disposition peut être utilisée avec n'importe laquelle des variantes décrites.

De préférence, la densité des fils orientés circonférentiellement est plus faible dans le flanc 1 que dans les bourrelets 2. Il est souhaitable que la variation de densité soit progressive, de façon à assurer une transition aussi progressive que possible entre le bourrelet et le flanc du pneumatique. D'une manière similaire, chacune des piles de fil enroulé circonférentiellement, par exemple les piles 61, 62, 63, peut se terminer radialment vers le haut par une zone de densité moindre.

Afin d'assurer une transition aussi progressive que possible entre la zone de contact avec la jante et l'équateur, au dessus de la zone de contact avec la jante et en dessous de l'équateur, les constituants en caoutchouc situés de part et d'autre de la carcasse respectent la relation suivante :

$$\frac{\sum_i E_i e_i(ext)}{\sum_j E_j e_j(int)} \geq 3$$

où $E_i$ ou $E_j$ est le module dans la direction radiale, $e_i$ ou $e_j$ l'épaisseur de chaque constituant "i" ou "j" en caoutchouc respectivement à l'extérieur 70 et à l'intérieur 71 de l'ensemble des alignements de fil de carcasse. Lorsqu'il y a plusieurs alignements de carcasse dans cette partie du pneumatique, pour l'application de cette formule, on considère seulement les constituants à l'extérieur du fil le plus extérieur, et respectivement à l'intérieur du fil le plus intérieur.

Lorsque le module de tous les constituants employés est comparable, cela signifie qu'il convient de faire passer la carcasse le plus possible du coté intérieur du flanc. On peut aussi utiliser des gommes plus molles (c'est à dire de module plus faible) du coté intérieur du flanc. Cela assure un bon compromis entre l'endurance du pneu et le confort qu'il procure.

On voit que la structure de renforcement proposée permet une évolution progressive des rigidités entre le flanc et le bourrelet. Cette structure propose au concepteur de pneumatique de très grandes latitudes de réglage de cette rigidité et de son évolution en jouant très simplement sur la densité des fils orientés circonférentiellement, et éventuellement sur le nombre d'alignements circonférentiels de fils de carcasse dans les bourrelets, et sur la nature des fils.

Cette structure composite permet d'obtenir une bonne assise du bourrelet sur sa jante, tout en étant peu encombrante et en utilisant au mieux les matériaux employés.

La structure proposée ne présente aucune discontinuité de renforcement, ce qui est très favorable à l'endurance du pneumatique, et ce qui conduit aussi, de façon inattendue à un meilleur confort du pneumatique.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Dans ce cas, le pneumatique peut être moulé et vulcanisé comme exposé dans le brevet US 4 895 692.

## Revendications

1. Pneumatique comportant au moins une carcasse ancrée de chaque côté du pneumatique vers le bas dans un bourrelet (2) dont la basse (20) est destinée à être montée sur un siège de jante, chaque bourrelet se prolongeant vers le haut par un flanc (1), les flancs (1) rejoignant vers le haut une bande de roulement, la carcasse comportant des tronçons de fil (3) de carcasse disposés de façon adjacente et formant dans la partie haute du flanc un seul alignement (30) circonférentiel de tronçons de fil allant de haut en bas dans le flanc (1), ladite carcasse étant ancrée dans ledit bourrelet (2) au moyen de fils (61, 62, 63) orientés circonférentiellement, chaque tronçon ayant un bord coupé disposé dans le bourrelet à un endroit proche de sa base, ledit bord coupé étant disposé sensiblement dans le prolongement radial du tronçon dont il est la limite, caractérisé en ce que, en se déplaçant radialement depuis le haut du flanc vers le bas du bourrelet, ledit alignement (30) se divise en au moins deux alignements (31, 32) circonférentiels écartés axialement, séparés par un élément de remplissage.

2. Pneumatique selon la revendication 1, caractérisé en ce que chacun desdits alignements (31, 32) du bourrelet est bordé latéralement par au moins une pile (61, 63 ou 62) de fils orientés circonférentiellement.

3. Pneumatique selon l'une des revendications 1 ou 2, caractérisé en ce qu'une couche (5) de mélange de caoutchouc ayant une dureté Shore A supérieure à 70 est interposée entre les fils orientés circonférentiellement et chaque alignement de fils de carcasse.

4. Pneumatique selon l'une des revendications 1 ou 3, caractérisé en ce que, axialement de part et d'autre des alignements (31 ou 32) du bourrelet, est disposée au moins une pile de fils orientés circonférentiellement (61, 62 et 62, 63).

5. Pneumatique selon l'une des revendications 1 à 4, caractérisé en ce que l'extrémité radialement la plus basse des fils de carcasse est disposée radialement à un niveau inférieur à la partie la plus basse de la ou des piles de fils circonférentiels adjacentes.

6. Pneumatique selon l'une des revendications 1 à 5, caractérisé en ce que, dans la partie du flanc située juste au dessus de la zone de contact avec la jante, et en dessous de l'équateur, les constituants en caoutchouc situés de part et d'autre de l'ensemble des alignements de fil de carcasse respectent la relation suivante :

$$\frac{\sum_i E_i e_i(ext)}{\sum_j E_j e_j(int)} \geq 3$$

où $E_i$ ou $E_j$ est le module dans la direction radiale, $e_i$ ou $e_j$ l'épaisseur de chaque constituant "i" ou "j" en caoutchouc respectivement à l'extérieur et à l'intérieur de l'ensemble des alignements de fil de carcasse.

7. Pneumatique selon la revendication 3, caractérisé en ce que la couche (5) de mélange de caoutchouc est un mélange contenant un élastomère synthétique SBR dont la Tg est comprise entre -70°C et -30°C, en proportion d'au moins 40 % du poids total d'élastomère.

8. Pneumatique selon la revendication 7, caractérisé en ce que le SBR est utilisé en coupage avec du PB dont la Tg est comprise entre -40°C et -10°C, la proportion totale d'élastomère synthétique SBR et PB valant au moins 40 % du poids total d'élastomère.

9. Pneumatique selon la revendication 7 ou 8, caractérisé en ce que le SBR utilisé est du type solution.

10. Pneumatique selon l'une des revendications 7 à 9, caractérisé en ce que le taux de soufre du mélange de ladite couche (5) est compris entre 5 et 8 % du poids total d'élastomère et ledit mélange comporte des additifs promoteurs d'adhésion.

11. Pneumatique selon l'une des revendications 1 à 10, caractérisé en ce que le bourrelet comporte des fils orientés circonférentiellement disposés en plusieurs piles adjacentes.

12. Pneumatique selon l'une des revendications 1 à 11, caractérisé en ce qu'il comporte une pile (66) de fil orienté circonférentiellement dans la partie du flanc (1) située sous l'équateur.

13. Pneumatique selon la revendication 12, caractérisé en ce que la densité de fils orientés circonférentiellement est plus faible dans le flanc (1) que dans le bourrelet (2).

**Claims**

1. A tyre comprising at least one carcass anchored on each side of the tyre towards the bottom in a bead (2) the base (20) of which is intended to be mounted on a rim seat, each bead being extended upwards by a sidewall (1), the sidewalls (1) joining a tread towards the top, the carcass comprising lengths of carcass cord (3) arranged adjacent to each other and forming in the upper part of the sidewall a single circumferential alignment (30) of lengths of cord extending from top to bottom in the sidewall (1), said carcass being anchored in said bead (2) by means of circumferentially oriented cords (61, 62, 63), each length having a cut edge located in the bead at a point close to its base, said cut edge being arranged substantially in the radial continuation of the length of which it forms the limit, characterised in that, upon moving radially from the top of the sidewall towards the bottom of the bead, said alignment (30) is divided into at least two axially spaced circumferential alignments (31, 32) separated by a filler element.

2. A tyre according to Claim 1, characterised in that each of said alignments (31, 32) of the bead is bordered laterally by at least one stack (61, 63 or 62) of circumferentially oriented cords.

3. A tyre according to one of Claims 1 or 2, characterised in that a layer (5) of rubber stock having a Shore A hardness greater than 70 is interposed between the circumferentially oriented cords and each alignment of carcass cords.

4. A tyre according to one of Claims 1 to 3, characterised in that, axially on either side of the alignments (31 or 32) of the bead, there is arranged at least one stack of circumferentially oriented cords (61, 62 and 62, 63).

5. A tyre according to one of Claims 1 to 4, characterised in that the radially lowermost end of the carcass cords is arranged radially at a lower level than the lowermost part of the adjacent stack or stacks of circumferential cords.

6. A tyre according to one of Claims 1 to 5, characterised in that, in the part of the sidewall located just above the zone of contact with the rim and below the equator, the rubber components located on opposite sides of the assembly of carcass cord alignments satisfy the following relationship:

$$\frac{\sum_i E_i e_i(ext)}{\sum_j E_j e_j(int)} \geq 3$$

in which $E_i$ or $E_j$ is the modulus in the radial direction, and $e_i$ or $e_j$ is the thickness of each rubber component "i" or "j" on the outside and inside respectively of the assembly of carcass cord alignments.

7. A tyre according to Claim 3, characterised in that the layer (5) of rubber stock is a mixture containing an SBR synthetic elastomer the Tg of which is between -70°C and -30°C, in a proportion of at least 40% of the total weight of elastomer.

8. A tyre according to Claim 7, characterised in that the SBR is used blended with PB the Tg of which is between -40°C and -10°C, the total proportion of SBR and PB synthetic elastomer being at least 40% of the total weight of elastomer.

9. A tyre according to Claim 7 or 8, characterised in that the SBR used is of solution type.

10. A tyre according to one of Claims 7 to 9, characterised in that the sulphur content of the stock of said layer (5) is between 5 and 8% of the total weight of elastomer and said stock contains adhesion-promoting additives.

11. A tyre according to one of Claims 1 to 10, characterised in that the bead has circumferentially oriented cords arranged in several adjacent stacks.

12. A tyre according to one of Claims 1 to 11, characterised in that it comprises a stack (66) of circumferentially oriented cords in the portion of the sidewall (1) located below the equator.

**13.** A tyre according to Claim 12, characterised in that the density of circumferentially oriented cords is less in the sidewall (1) than in the bead (2).

## Patentansprüche

**1.** Reifen mit mindestens einer Karkasse, die auf jeder Seite des Reifens nach unten hin in einem Wulst (2) verankert ist, dessen unterer Teil (20) dazu bestimmt ist, auf einen Felgensitz montiert zu werden, wobei sich jeder Wulst nach oben durch eine Flanke (1) verändert, die Flanken (1) nach oben hin sich mit einer Lauffläche vereinen, die Karkasse Stücke aus Karkassendraht (3) aufweist, die nebeneinanderliegent angeordnet sind und im oberen Teil der Flanke eine einzige, in Umfangsrichtung verlaufende Reihe (30) aus Drahtstücken bildet, die in der Flanke (1) von oben nach unten verlaufen, die genannte Karkasse im genannten Wulst (2) mittels Drähten (61, 62, 63) verankert ist, die in Umfangsrichtung ausgerichtet sind, jedes Stück ein abgeschnittenes Ende aufweist, das im Wulst an einer Stelle nahe seiner Basis angeordnet ist, und das genannte abgeschnittene Ende im wesentlichen in der radialen Verlängerung des Stücks angeordnet ist, von dem es die Begrenzung bildet, dadurch gekennzeichnet daß, die genannte Reihe (30), wenn man radial von der Oberseite der Flanke bis zur Unterseite des Wulstes fortschreitet, sich in mindestens zwei Reihen (31, 32) aufteilt, die in Umfangsrichtung verlaufen, axial auseinandergespreizt sind und durch ein Füllelement getrennt sind.

**2.** Reifen nach Anspruch 1, dadurch gekennzeichnet, daß jede der genannten Reihen (31, 32) des Wulstes seitlich durch mindestens einen Stapel (61, 63 oder 62) von Drähten begrenzt ist, die in Umfangsrichtung ausgerichtet sind.

**3.** Reifen nach einem der Ansprüche 1 oder 2, dadurch gekennzeichnet, daß eine Schicht (5) aus einer Gummimischung, die eine Shore-Härte A aufweist, die größer ist als 70, zwischen den Drähten, die in Umfangsrichtung ausgerichtet sind, und jeder Reihe von Karkassendrähten angeordnet ist.

**4.** Reifen nach einem der Ansprüche 1 oder 3, dadurch gekennzeichnet, daß axial beiderseits der Reihen (31 oder 32) des Wulstes mindestens ein Stapel aus Drähten (61, 62 und 62, 63) angeordnet ist, die in Umfangsrichtung ausgerichtet sind.

**5.** Reifen nach einem der Ansprüche 1 bis 4, dadurch gekennzeichnet, daß das radial am weitesten unten liegende Ende der Karkassendrähte radial auf einer Höhe angeordnet ist, die niedriger liegt als der niedrigste Teil des oder der Stapel(s) aus Drähten, die in Umfangsrichtung nebeneinanderliegen.

**6.** Reifen nach einem der Ansprüche 1 bis 5, dadurch gekennzeichnet, daß im Teil der Flanke, der unmittelbar über der Berührungszone mit der Felge gelegen ist, sowie unter dem Äquator, die Gummibestandteile, die beiderseits der Anordnung von Reihen aus Karkassendrähten gelegen sind, die folgende Zuordnung beachten:

$$\frac{\sum_i E_i e_i (au\beta en)}{\sum_j E_j e_j (innen)} \geq 3$$

wobei $E_i$ oder $E_j$ das Modul in radialer Richtung ist, und $e_i$ oder $e_j$ die Dicke eines jeden Bestandteils "i" bzw. "j" aus Gummi auf der Außenseite bzw. der Innenseite der Gruppe von Reihen von Karkassendrähten ist.

**7.** Reifen nach Anspruch 3, dadurch gekennzeichnet, daß die Schicht (5) aus Gummimischung eine Mischung ist, die ein synthetisches Elastomer (Styrol-Butadien-Kautschuk) enthält, dessen Glaspunkt zwischen -70°C und -30°C liegt, und zwar in einem Anteil von mindestens 40 Gew.% der Gesamtheit an Elastomer.

**8.** Reifen nach Anspruch 7, dadurch gekennzeichnet, daß der benutzte Styrol-Butadien-Kautschuk in einem Verschnitt mit PB (Polybuten) verwendet wird, dessen Glaspunkt zwischen -40°C und -10°C liegt, wobei der Gesamtanteil des synthetischen Elastomers (Styrol-Butadien-Kautschuk und Polybuten) mindestens 40 Gew.% der Gesamtheit des Elastomers beträgt.

**9.** Reifen nach Anspruch 7 oder 8, dadurch gekennzeichnet, daß der verwendete Styrol-Butadien-Kautschuk nach Art einer Lösung verwendet wird.

**10.** Reifen nach einem der Ansprüche 7 bis 9, dadurch gekennzeichnet, daß der Schwefelanteil der Mischung der genannten Schicht (5) zwischen 5 und 8 Gew.% der Gesamtheit an Elastomer liegt, und daß die genannte Mischung Zuschlagstoffe aufweist, die die Haftung fördern.

**11.** Reifen nach einem der Ansprüche 1 bis 10, dadurch gekennzeichnet, daß der Wulst Drähte aufweist, die in Umfangsrichtung ausgerichtet sind und in mehreren benachbarten Stapeln angeordnet sind.

**12.** Reifen nach einem der Ansprüche 1 bis 11,

**EP 0 664 231 B1**

dadurch gekennzeichnet, daß er einen Stapel (66) aus Draht aufweist, der in Umfangsrichtung in dem Teil der Flanke (1) ausgerichtet ist, der unter dem Äquator liegt.

13. Reifen nach Anspruch 12, dadurch gekennzeichnet, daß die Dichte der in Umfangsrichtung ausgerichteten Drähte in der Flanke (1) geringer ist als im Wulst (2).

Fig. 1

Fig 2

Fig. 3